# EUROPEAN PATENT APPLICATION

(11) **EP 4 664 549 A1**
(43) Date of publication of application: **17.12.2025**
(21) Application number: 23921029.7
(22) Date of filing: 07.02.2023
(51) Int. Cl.: H01M 4/139, H01M 4/13, H01M 4/62, H01M 10/0562

(54) **METHOD FOR MANUFACTURING ALL-SOLID-STATE BATTERY ELECTRODE, AND ALL-SOLID-STATE BATTERY ELECTRODE**

(71) Applicant: Nissan Motor Co., Ltd., Kanagawa 221-0023 (JP)
(72) Inventor: DOI, Shotaro, Atsugi-shi, Kanagawa 243-0123 (JP); UCHIKAWA, Fumihiro, Atsugi-shi, Kanagawa 243-0123 (JP)
(74) Representative: Grünecker Patent- und Rechtsanwälte PartG mbB
(86) International application number: PCT/JP2023/003920
(87) International publication number: WO 2024/166193

(57) **Abstract**

Provided is a means capable of reducing resistance in an electrode for an all-solid-state battery including an active material layer containing an active material, a solid electrolyte, a fibrous conductive aid, and polytetrafluoroethylene and having sufficient dispersibility. Provided is a method for manufacturing an electrode for an all-solid-state battery including an active material layer containing an active material, a solid electrolyte, a fibrous conductive aid, and polytetrafluoroethylene, the method including: a first stirring step of placing the active material and the solid electrolyte in a first container and stirring them using a resonance acoustic mixer; and a second stirring step of placing a mixture obtained in the first stirring step and the fibrous conductive aid in a second container and stirring them using a resonance acoustic mixer, wherein the first stirring step and the second stirring step satisfy at least one of predetermined conditions (1) to (4).

## Description

### TECHNICAL FIELD

The present invention relates to a method for manufacturing an electrode for an all-solid-state battery, and an electrode for an all-solid-state battery.

### BACKGROUND ART

In recent years, research and development on an all-solid-state battery using an oxide-based or sulfidebased solid electrolyte as an electrolyte have been actively conducted. The solid electrolyte is a material mainly made of an ion conductor that enables ion conduction in a solid. For this reason, the all-solid-state battery has the advantage that, in principle, various problems caused by a combustible organic electrolyte solution do not occur unlike the conventional liquid-type battery using a non-aqueous electrolyte. In general, use of a highpotential and large-capacity positive electrode material and a large-capacity negative electrode material can achieve significant improvement in output density and energy density of a battery.

In the all-solid-state battery, in order to keep the ion conduction path and the electron conduction path in the active material layer favorable, the active material layer may contain a solid electrolyte and a fibrous conductive aid in addition to the active material. For example, JP 2016-58277 A discloses a positive electrode mixture containing positive electrode active material particles, a fibrous conductive material (fibrous conductive aid), a particulate conductive material, and a solid electrolyte, in which the number of positive electrode active material particles in contact with the fibrous conductive material via the particulate conductive material is 40% or more with the total number of positive electrode active material particles as 100%. According to JP 2016-58277 A, a positive electrode mixture having such a configuration makes it possible to achieve both ion conductivity and electron conductivity and to obtain a solid battery having excellent output characteristics. JP 2016-58277 A also discloses that the positive electrode mixture having the above configuration can contain a binder such as polytetrafluoroethylene (PTFE).

### SUMMARY OF INVENTION

### Technical Problem

However, according to the study of the present inventors, it has been found that when PTFE is applied to the positive electrode mixture described in JP 2016-58277 A, the electrode may have high resistance.

Therefore, an object of the present invention is to provide a means capable of reducing resistance of an electrode in an electrode for an all-solid-state battery including an active material layer containing an active material, a solid electrolyte, a fibrous conductive aid, and PTFE and having sufficient dispersibility.

### Solution to Problem

The present inventors have conducted intensive studies to solve the above problems. As a result, the present inventors have found that the above problems can be solved by adopting a two-step stirring step using a resonance acoustic mixer as a method for dispersing an active material, a solid electrolyte, and a fibrous conductive aid, and have completed the present invention.

As a result of analyzing the electrode for an all-solid-state battery manufactured by the above method, it has been found that a fibrous conductive aid having a predetermined length is contained in a predetermined ratio, and this solves the above problem.

That is, a method for manufacturing an electrode for an all-solid-state battery according to one aspect of the present invention is a method for manufacturing an electrode for an all-solid-state battery including an active material layer containing an active material, a solid electrolyte, a fibrous conductive aid, and polytetrafluoroethylene, the method including: a first stirring step of placing the active material and the solid electrolyte in a first container and stirring them using a resonance acoustic mixer; and a second stirring step of placing a mixture obtained in the first stirring step and the fibrous conductive aid in a second container and stirring them using a resonance acoustic mixer. The manufacturing method is characterized in that the first stirring step and the second stirring step satisfy at least one of the following conditions (1) to (4): condition (1): a maximum distance D1 between inner walls of the first container parallel to a vibration direction of the resonance acoustic mixer in the first stirring step is shorter than a maximum distance D2 between inner walls of the second container parallel to the vibration direction of the resonance acoustic mixer in the second stirring step; condition (2): a frequency of the resonance acoustic mixer in the first stirring step is higher than a frequency of the resonance acoustic mixer in the second stirring step; condition (3): an acceleration of the resonance acoustic mixer in the first stirring step is higher than an acceleration of the resonance acoustic mixer in the second stirring step; and condition (4): a stirring time in the first stirring step is longer than a stirring time in the second stirring step.

An electrode for an all-solid-state battery according to another aspect of the present invention is an electrode for an all-solid-state battery including an active material layer containing an active material, a solid electrolyte, a fibrous conductive aid, and polytetrafluoroethylene, wherein a ratio of the number of fibrous conductive aids having a fiber length of 2 times or more an average particle size (D50) of the active material to the total number of the fibrous conductive aids is 40% or more and 90% or less.

### BRIEF DESCRIPTION OF DRAWINGS

Fig. 1 is a perspective view illustrating an appearance of a flat laminate type all-solid-state lithium secondary battery as one embodiment of an all-solid-state battery according to the present invention.
Fig. 2 is a cross-sectional view taken along line 2-2 illustrated in Fig. 1.

### DESCRIPTION OF EMBODIMENTS

### <Method for manufacturing electrode for all-solid-state battery>

A method for manufacturing an electrode for an all-solid-state battery according to one aspect of the present invention is a method for manufacturing an electrode for an all-solid-state battery including an active material layer containing an active material, a solid electrolyte, a fibrous conductive aid, and polytetrafluoroethylene, the method including: a first stirring step of placing the active material and the solid electrolyte in a first container and stirring them using a resonance acoustic mixer; and a second stirring step of placing a mixture obtained in the first stirring step and the fibrous conductive aid in a second container and stirring them using a resonance acoustic mixer. The manufacturing method is characterized in that the first stirring step and the second stirring step satisfy at least one of the following conditions (1) to (4): condition (1): a maximum distance D1 between inner walls of the first container parallel to a vibration direction of the resonance acoustic mixer in the first stirring step is shorter than a maximum distance D2 between inner walls of the second container parallel to the vibration direction of the resonance acoustic mixer in the second stirring step; condition (2): a frequency of the resonance acoustic mixer in the first stirring step is higher than a frequency of the resonance acoustic mixer in the second stirring step; condition (3): an acceleration of the resonance acoustic mixer in the first stirring step is higher than an acceleration of the resonance acoustic mixer in the second stirring step; and condition (4): a stirring time in the first stirring step is longer than a stirring time in the second stirring step. According to the manufacturing method of the present aspect, in an electrode for an all-solid-state battery including an active material layer containing an active material, a solid electrolyte, a fibrous conductive aid, and PTFE and having sufficient dispersibility, resistance can be reduced. Hereinafter, each step in the manufacturing method of the present aspect will be described.

### [First stirring step]

In the first stirring step, an active material and a solid electrolyte among the materials constituting the active material layer are placed in a first container and stirred using a resonance acoustic mixer.

### (Active material)

The active material exchanges electric energy by occluding and releasing ions. When the electrode for an all-solid-state battery according to the present aspect is a positive electrode, the active material is a positive electrode active material, and when the electrode for an all-solid-state battery according to the present aspect is a negative electrode, the active material is a negative electrode active material.

The positive electrode active material is not particularly limited as long as it is a material that can release lithium ions in the charging process of the all-solid-state battery and can occlude lithium ions in the discharging process. An example of such a positive electrode active material includes a material containing an M1 element and an O element, and the M1 element includes at least one element selected from the group consisting of Li, Mn, Ni, Co, Cr, Fe, and P. Examples of such a positive electrode active material include layered rock salt-type active materials such as LiCoO₂, LiMnO₂, LiNiO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, Si-containing active materials such as Li₂FeSiO₄ and Li₂MnSiO₄, and the like. Examples of the oxide active material other than those described above include Li₄Ti₅O₁₂ and LiVO₂.

The positive electrode active material may contain a sulfur element. The positive electrode active material containing a sulfur element is not particularly limited, but examples thereof include particles or a thin film of an organic sulfur compound or an inorganic sulfur compound in addition to the elemental sulfur (S), and any material may be used as long as the material can release lithium ions during charging and occlude lithium ions during discharging by utilizing an oxidation-reduction reaction of sulfur. Examples of the organic sulfur compound include a disulfide compound, sulfur-modified polyacrylonitrile, sulfur-modified polyisoprene, rubeanic acid (dithiooxamide), carbon polysulfide, and the like. Among them, a disulfide compound, sulfur-modified polyacrylonitrile, and rubeanic acid are preferable, and sulfur-modified polyacrylonitrile is particularly preferable. As the disulfide compound, a disulfide compound having a dithiobiurea derivative, a thiourea group, a thioisocyanate, or a thioamide group is more preferable. Meanwhile, the inorganic sulfur compound is preferable because it is excellent in stability, and specific examples thereof include elemental sulfur (S), S-carbon composite, Li₂S, TiS₂, TiS₃, TiS₄, NiS, NiS₂, CuS, FeS₂, MoS₂, MoS₃, and the like. Among them, S, Li₂S, S-carbon composite, TiS₂, TiS₃, TiS₄, FeS₂, and MoS₂ are preferable, elemental sulfur (S), Li₂S, TiS₂, and FeS₂ are more preferable, and from the viewpoint of high capacity, elemental sulfur (S) or Li₂S is particularly preferable. As the elemental sulfur (S), α-sulfur, β-sulfur, or γ-sulfur having a S₈ structure can be used. These elemental sulfurs (S) occlude lithium ions at the time of discharge and exist in the positive electrode active material layer in the form of a (poly)sulfide of lithium.

In some cases, two or more kinds of positive electrode active materials may be used in combination. Needless to say, a positive electrode active material other than the above-described positive electrode active materials may be used.

The shape of the positive electrode active material is preferably particulate. When the positive electrode active material is particulate, the average particle size (D50) thereof is preferably within a range of 1 nm to 100 µm, more preferably within a range of 10 nm to 50 µm, further preferably within a range of 100 nm to 20 µm, and particularly preferably within a range of 1 to 20 µm. In the present specification, the value of the average particle size (D50) of the active material can be measured by a laser diffraction scattering method.

The content of the positive electrode active material in the positive electrode active material layer is not particularly limited, but is preferably within a range of 30 to 99 mass%, more preferably within a range of 40 to 90 mass%, further preferably within a range of 50 to 85 mass%.

The negative electrode active material is not particularly limited as long as it is a material that can occlude lithium ions in the charging process of the all-solid-state battery and can release lithium ions in the discharging process. An example of such a negative electrode active material includes a carbon material, a metal oxide, and a metal active material. Examples of the carbon material include natural graphite, artificial graphite, mesocarbon microbead (MCMB), highly oriented graphite (HOPG), hard carbon, soft carbon, and the like. Examples of the metal oxide include Nb₂O₅, Li₄Ti₅O₁₂, and the like. A silicon-based negative electrode active material or a tin-based negative electrode active material may be used. Here, a Si simple substance is preferably used as the silicon-based negative electrode active material. Similarly, it is also preferable to use a silicon oxide such as SiOₓ (0.3 ≤ x ≤ 1.6) disproportionated into two phases: a Si phase and a silicon oxide phase. At this time, the range of x is more preferably 0.5 ≤ x ≤ 1.5 and still more preferably 0.7 ≤ x ≤ 1.2. Furthermore, an alloy containing silicon (silicon-containing alloy-based negative electrode active material) may be used. Meanwhile, examples of the negative electrode active material containing a tin element (tin-based negative electrode active material) include a Sn simple substance, a tin alloy (a Cu-Sn alloy and a Co-Sn alloy), an amorphous tin oxide, a tin silicon oxide, and the like. Among them, SnB_{0.4}P_{0.6}O_{3.1} is exemplified as the amorphous tin oxide. SnSiO₃ is exemplified as the tin silicon oxide. As the negative electrode active material, a metal containing lithium may be used. Such a negative electrode active material is not particularly limited as long as it is an active material containing lithium, and examples thereof include lithium-containing alloys in addition to lithium metal. The lithium-containing alloys are not particularly limited, and examples thereof include an alloy of Li and at least one of In, Al, Si, Sn, Mg, Au, Ag, and Zn.

In some cases, two or more kinds of negative electrode active materials may be used in combination. Needless to say, a negative electrode active material other than the above-described negative electrode active materials may be used.

The shape of the negative electrode active material is preferably particulate. When the negative electrode active material is particulate, the average particle size (D50) thereof is preferably within a range of 1 nm to 100 µm, more preferably within a range of 10 nm to 50 µm, further preferably within a range of 100 nm to 20 µm, and particularly preferably within a range of 1 to 20 µm.

The content of the negative electrode active material in the negative electrode active material layer is not particularly limited, but is preferably within a range of 40 to 100 mass%, and more preferably within a range of 50 to 90 mass%.

### (Solid electrolyte)

The solid electrolyte refers to a material mainly made of an ion conductor that enables ion conduction in a solid, and particularly refers to a material having a degree of lithium-ion conductivity at a normal temperature (25°C) of 1 × 10⁻⁵ S/cm or more, and the degree of lithium-ion conductivity thereof is 1 × 10⁻⁴ S/cm or more. Here, a value of the degree of ionic conductivity can be measured by an AC impedance method. Examples of the solid electrolyte include a sulfide solid electrolyte and an oxide solid electrolyte.

The solid electrolyte is preferably a sulfide solid electrolyte containing an S element, more preferably a sulfide solid electrolyte containing a Li element, an M element, and an S element, where the M element includes at least one element selected from the group consisting of P, Si, Ge, Sn, Ti, Zr, Nb, Al, Sb, Br, Cl, and I, and further preferably a sulfide solid electrolyte containing an S element, a Li element, and a P element, from the viewpoint of exhibiting excellent lithium-ion conductivity and being capable of further following the volume change of the active material associated with charging and discharging.

The sulfide solid electrolyte may have a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS. As the sulfide solid electrolyte, for example, LGPS represented by Li₍₄₋ₓ₎Ge₍₁₋ₓ₎PₓS₄ (x satisfies 0 < x < 1) or the like may be used. More specifically, examples thereof include LPS (Li₂S-P₂S₅), Li₇P₃S₁₁, Li_{3.2}P_{0.96}S, Li_{3.25}Ge_{0.25}P_{0.75}S₄, Li₁₀GeP₂S₁₂, Li₆PS₅X (where X is Cl, Br, or I), and the like. The description of "Li₂S-P₂S₅" means a sulfide solid electrolyte obtained by using a raw material composition containing Li₂S and P₂S₅, and the same applies to other descriptions. Above all, the sulfide solid electrolyte has high ion conductivity and low volume modulus, and thus is preferably selected from the group consisting of LPS (Li₂S-P₂S₅), Li₆PS₅X (where X is Cl, Br, or I), Li₇P₃S₁₁, Li_{3.2}P_{0.96}S, and Li₃PS₄, from the viewpoint of capable of further following the volume change of the active material associated with charging and discharging.

The shape of the solid electrolyte is preferably particulate. When the solid electrolyte is particulate, the average particle size (D50) thereof is not particularly limited, but is preferably 0.01 µm or more and 40 µm or less, more preferably 0.01 µm or more and 20 µm or less, further preferably 0.1 µm or more and 10 µm or less, and still more preferably 0.1 µm or more and 1 µm or less. In the present specification, as the average particle size (D50) of the solid electrolyte, a value calculated as an average value of the particle sizes of the solid electrolyte observed in several to several dozen visual fields using an observation means such as a scanning electron microscope (SEM) or a transmission electron microscope (TEM) is adopted.

The content of the solid electrolyte in the active material layer is preferably 1 mass% or more and 60 mass% or less, and more preferably 10 mass% or more and 50 mass% or less.

### (First container)

As the first container used in the first stirring step, a known sealed container can be used without limitation as long as it has sealability, strength, durability, and the like such that contents do not leak at the time of stirring and the container is not damaged.

The material of the first container can be appropriately selected from a synthetic resin, glass, a metal, and the like. As a material of the sealed container, a synthetic resin is preferable from the viewpoint of visibility of contents. Examples of the synthetic resin include polyethylene (PE), polypropylene (PP), polyethylene terephthalate (PET), polyethylene naphthalate (PEN), and the like. Among them, PP and PE are preferable from the viewpoint of visibility of contents and versatility.

The shape of the first container is also not particularly limited as long as it can be installed in the resonance acoustic mixer, and examples thereof include a polygonal prism shape such as a triangular prism and a quadrangular prism (cube, rectangular parallelepiped), a cylindrical shape, and the like.

The filling rate of the active material and the solid electrolyte in the first container is preferably 30 vol% or more and 80 vol% or less, and more preferably 40 vol% or more and 60 vol% or less from the viewpoint of the efficiency of dispersion due to collision of the contents with the inner wall or collision between particles.

### (Resonance acoustic mixer)

In this step, the active material (the positive electrode active material or the negative electrode active material) and the solid electrolyte are placed in the first container and sealed, and then stirred using a resonance acoustic mixer. Examples of the resonance acoustic mixer include, but are not limited to, LabRAM I and LabRAM II manufactured by RESODYN ACOUSTIC MIXERS, INC.

The frequency of the resonance acoustic mixer is not particularly limited, but is preferably 10 Hz or more and 200 Hz or less, more preferably 20 Hz or more and 150 Hz or less, further preferably 40 Hz or more and 100 Hz or less, and particularly preferably 50 Hz or more and 80 Hz or less from the viewpoint of efficiently stirring the active material and the solid electrolyte.

The acceleration of the resonance acoustic mixer is also not particularly limited, but is preferably 10 G or more and 200 G or less, more preferably 30 G or more and 180 G or less, further preferably 50 G or more and 150 G or less, and particularly preferably 80 G or more and 120 G or less from the viewpoint of efficiently stirring the active material and the solid electrolyte.

The stirring time is preferably 1 minute or more and 120 minutes or less, more preferably 5 minutes or more and 60 minutes or less, and further preferably 10 minutes or more and 30 minutes or less from the viewpoint of sufficiently dispersing the active material and the solid electrolyte.

### [Second stirring step]

In the second stirring step, a mixture obtained in the first stirring step and the fibrous conductive aid are placed in a second container and stirred using a resonance acoustic mixer.

### (Fibrous conductive aid)

The fibrous conductive aid can contribute to improvement in conductivity (reduction in resistance) in the active material layer. In the present specification, the "fibrous conductive aid" refers to a conductive aid having an aspect ratio of 10 or more and a minimum Feret diameter of 0.2 µm or less in an observation image when observed using a scanning electron microscope (SEM). The electron conductivity of the fibrous conductive aid is preferably 1 S/m or more, more preferably 1×10² S/m or more, further preferably 1×10⁴ S/m or more, and still more preferably 1×10⁵ S/m or more. The upper limit value of the electron conductivity of the fibrous conductive aid is not particularly limited, but is usually 1×10⁷ S/m or less.

The fibrous conductive aid is preferably conductive carbon because it is lightweight and has excellent conductivity. The type of fibrous carbon is not particularly limited as long as it has the above-described shape, and examples thereof include carbon fibers (carbon nanofibers), graphene, and carbon nanotubes (single-walled carbon nanotubes and multi-walled carbon nanotubes). Among them, carbon fibers (carbon nanofibers) are preferable. The fibrous carbon may be used singly or in combination of two or more kinds thereof.

The content of the fibrous conductive aid in the active material layer is preferably 1 mass% or more and 10 mass% or less, and more preferably 2 mass% or more and 5 mass% or less.

### (Second container)

The second container used in the second stirring step is not particularly limited, and the same container as the first container in the first stirring step can be used. The first container and the second container may be different from each other, but from the viewpoint of convenience of operation, the first container and the second container are preferably the same container. In this case, in the second stirring step, it is more preferable that the fibrous conductive aid is placed in the container containing the mixture obtained in the first stirring step and stirred using a resonance acoustic mixer. This makes it possible to omit the step of taking in and out the powder from the container between the first stirring step and the second stirring step.

The filling rate of the mixture obtained in the first stirring step and the fibrous conductive aid in the second container is preferably 30 vol% or more and 80 vol% or less, and more preferably 40 vol% or more and 60 vol% or less from the viewpoint of the efficiency of dispersion due to collision of the contents with the inner wall.

### (Resonance acoustic mixer)

In this step, the mixture obtained in the first stirring step and the fibrous conductive aid are placed in the second container and sealed, and then stirred using a resonance acoustic mixer. The resonance acoustic mixer, the frequency, the acceleration, and the stirring time in the second stirring step are not particularly limited, and are the same as those in the first stirring step.

In the method for manufacturing an electrode for an all-solid-state battery according to the present aspect, the first stirring step and the second stirring step satisfy at least one of the following conditions (1) to (4).
Condition (1): a maximum distance D1 between inner walls of the first container parallel to a vibration direction of the resonance acoustic mixer in the first stirring step is shorter than a maximum distance D2 between inner walls of the second container parallel to the vibration direction of the resonance acoustic mixer in the second stirring step;
condition (2): a frequency of the resonance acoustic mixer in the first stirring step is higher than a frequency of the resonance acoustic mixer in the second stirring step;
condition (3): an acceleration of the resonance acoustic mixer in the first stirring step is higher than an acceleration of the resonance acoustic mixer in the second stirring step; and
condition (4): a stirring time in the first stirring step is longer than a stirring time in the second stirring step.

According to the manufacturing method of the present aspect, the active material and the solid electrolyte are sufficiently dispersed in the first stirring step, and then the fibrous conductive aid is added in the second stirring step. As a result, the fibrous conductive aid is more easily dispersed in the mixture of the active material and the solid electrolyte, and thus a sufficient dispersion state can be obtained even when stirring in a state where the fibrous conductive aid is added is performed under milder conditions as compared with the conventional case. By performing the first stirring step and the second stirring step so as to satisfy at least one of the conditions (1) to (4), a large shear force is less likely to be applied in the stirring after the fibrous conductive aid is added. Thus, cutting of the fibrous conductive aid is suppressed, and a mixture containing the fibrous conductive aid maintaining a sufficient fiber length can be obtained. Then, by kneading the obtained mixture and PTFE in a kneading step to be described later, it is possible to obtain an active material layer in which the length of the fibrous conductive aid is maintained longer than that in the conventional case, and as a result, the resistance of the electrode having the active material layer can be reduced.

When the condition (1) is satisfied, the ratio (D2/D1) of the maximum distance D2 between the inner walls of the second container parallel to the vibration direction of the resonance acoustic mixer in the second stirring step to the maximum distance D1 between the inner walls of the first container parallel to the vibration direction of the resonance acoustic mixer in the first stirring step is preferably 1.2 or more and 4 or less, more preferably 1.5 or more and 3 or less, and further preferably 2 or more and 2.5 or less. When the condition (1) is not satisfied, the ratio (D2/D1) is preferably 1.

When the condition (2) is satisfied, the ratio (F1/F2) of the frequency F1 of the resonance acoustic mixer in the first stirring step to the frequency F2 of the resonance acoustic mixer in the second stirring step is preferably 1.2 or more and 4 or less, more preferably 1.5 or more and 3 or less, further preferably 2 or more and 2.5 or less. When the condition (2) is not satisfied, the ratio (F1/F2) is preferably 1 (that is, the frequency of the resonance acoustic mixer in the first stirring step is the same as the frequency of the resonance acoustic mixer in the second stirring step).

When the condition (3) is satisfied, the ratio (A1/A2) of the acceleration A1 of the resonance acoustic mixer in the first stirring step to the acceleration A2 of the resonance acoustic mixer in the second stirring step is preferably 1.2 or more and 4 or less, more preferably 1.5 or more and 3 or less, and further preferably 2 or more and 2.5 or less. When the condition (3) is not satisfied, the ratio (A1/A2) is preferably 1 (that is, the acceleration of the resonance acoustic mixer in the first stirring step is the same as the acceleration of the resonance acoustic mixer in the second stirring step).

When the condition (4) is satisfied, the ratio (T1/T2) of the stirring time T1 in the first stirring step to the stirring time T2 in the second stirring step is preferably 1.2 or more and 4 or less, more preferably 1.5 or more and 3 or less, and further preferably 2 or more and 2.5 or less. When the condition (4) is not satisfied, the ratio (T1/T2) is preferably 1 (that is, the stirring time in the first stirring step is the same as the stirring time in the second stirring step).

According to a more preferred embodiment, the first stirring step and the second stirring step satisfy at least the condition (1). According to a further preferred embodiment, the first stirring step and the second stirring step satisfy the condition (1), and satisfy the following conditions (2') to (4'): condition (2'): a frequency of the resonance acoustic mixer in the first stirring step is the same as a frequency of the resonance acoustic mixer in the second stirring step (the ratio (F1/F2) is 1) or higher than a frequency of the resonance acoustic mixer in the second stirring step; condition (3'): an acceleration of the resonance acoustic mixer in the first stirring step is the same as an acceleration of the resonance acoustic mixer in the second stirring step (the ratio (A1/A2) is 1) or higher than a frequency of the resonance acoustic mixer in the second stirring step; and condition (4'): a stirring time in the first stirring step is the same as a stirring time in the second stirring step (the ratio (T1/T2) is 1) or longer than a frequency of the resonance acoustic mixer in the second stirring step. This makes it possible to ensure sufficient stirring in each of the first stirring step and the second stirring step. According to a particularly preferred embodiment, the first stirring step and the second stirring step satisfy the condition (1), the ratio (F1/F2) is 1, the ratio (A1/A2) is 1, and the ratio (T1/T2) is 1. In these embodiments, from the viewpoint of convenience of operation, the first container and the second container are preferably the same container (that is, the stirring is performed using the same container in the first stirring step and the second stirring step). In this case, by changing the orientation of the container with respect to the vibration direction of the resonance acoustic mixer, the maximum distance D1 between the inner walls and the maximum distance D2 between the inner walls are set so as to satisfy the condition (1). According to such an embodiment, the effect of the present invention can be exhibited by a simpler operation.

In the present aspect, from the viewpoint of further improving the dispersibility of the active material and the solid electrolyte and the viewpoint of further suppressing the cutting of the fibrous conductive aid, it is also preferable to satisfy two or more, three or more, or four of the conditions (1) to (4).

In the first stirring step and/or the second stirring step, materials (hereinafter, also referred to as "other materials") other than the active material, the solid electrolyte, and the fibrous conductive aid described above may be added and stirred as necessary. Examples of the other materials include nonfibrous conductive aids such as carbon black such as acetylene black, Ketjen black (registered trademark), furnace black, channel black, thermal black.

The first stirring step and the second stirring step are preferably performed in the absence of a solvent. This eliminates the need for solvent removal when an active material layer is formed. The reaction between the solid electrolyte and the solvent can be prevented.

### (Kneading step)

The manufacturing method according to the present aspect preferably further includes, after the second stirring step, a kneading step of kneading a mixture obtained in the second stirring step and polytetrafluoroethylene (PTFE). Here, the timing of adding polytetrafluoroethylene (PTFE) is not particularly limited, and may be either when the active material and the solid electrolyte are placed in the first container in the first stirring step, when the fibrous conductive aid is placed in the second container in the second stirring step, or after the second stirring step and before the kneading step. In particular, it is preferable to add polytetrafluoroethylene (PTFE) after the second stirring step and before the kneading step, and this can further suppress cutting of the fibrous conductive aid. That is, according to a preferred aspect, in the kneading step, the polytetrafluoroethylene is added to the mixture obtained in the second stirring step, and the mixture obtained in the second stirring step and the polytetrafluoroethylene (PTFE) are kneaded.

Polytetrafluoroethylene is a polymer of tetrafluoroethylene, and can be fibrillated (fiberized) by application of a shear force due to kneading. The active material, the solid electrolyte, and the fibrous conductive aid are entangled and held in the fibrous tissue of the fibrillated PTFE. The polytetrafluoroethylene may include one in which a terminal or a part of a side chain is substituted (modified) with another substituent. In the case of a form in which a terminal or a part of a side chain is substituted (modified) with another substituent, the proportion of the structural unit in which the terminal or side chain is substituted (modified) with another substituent is preferably 10 mol% or less, and more preferably 5 mol% or less, relative to 100 mol% of all the structural units.

The kneading apparatus used for kneading is not particularly limited as long as a shear force is applied to PTFE, and an extruder, a Banbury mixer, a roller, a kneader, or the like can be appropriately employed. Kneading may be performed using a mortar.

Through the above steps, a mixture containing the active material, the solid electrolyte, the fibrous conductive aid, and PTFE is obtained. Then, the mixture is molded into a sheet shape using a roller or the like and cut into a desired size, whereby an active material layer can be obtained. The thickness of the active material layer varies depending on the configuration of the intended all-solid-state battery, but is, for example, preferably within a range of 0.1 to 1000 µm, and more preferably 40 to 100 µm.

### <Electrode for all-solid-state battery>

According to the manufacturing method described above, by dispersing the active material, the solid electrolyte, and the fibrous conductive aid by a predetermined two-step stirring step, the fiber length of the fibrous conductive aid in the active material layer can be maintained long. Therefore, according to another aspect of the present invention, there is provided an electrode for an all-solid-state battery including an active material layer containing an active material, a solid electrolyte, a fibrous conductive aid, and polytetrafluoroethylene, wherein a ratio of the number of fibrous conductive aids having a fiber length of 2 times or more an average particle size (D50) of the active material to the total number of the fibrous conductive aids is 40% or more and 90% or less. According to the above configuration, since the electron conduction path between the active materials is favorably formed, the resistance of the electrode can be reduced. In the present specification, the fiber length of the fibrous conductive aid is determined by a method described in Examples described later.

The ratio of the number of fibrous conductive aids having a fiber length of 2 times or more an average particle size (D50) of the active material to the total number of the fibrous conductive aids is essentially 40% or more and 90% or less, but is preferably 50% or more and 80% or less and more preferably 50% or more and 70% or less. When the ratio is less than 40%, the electron conduction path between the active materials becomes insufficient, and the resistance of the electrode may increase. When the ratio is more than 90%, the ratio of the short fibrous conductive aid becomes relatively small, but this decreases the contact point between the active material and the fibrous conductive aid, so that the resistance of the electrode may increase.

In the present aspect, from the viewpoint of further reducing the resistance of the electrode, the fiber length distribution of the fibrous conductive aid preferably has at least two peaks. More preferably, the fiber length distribution has two peaks. With such a configuration, an electron conduction path between the active materials and a contact point with the active material can be further formed. As a result, the resistance of the electrode can be further reduced.

### <All-solid-state battery>

Since the resistance of the electrode obtained by the above-described method for manufacturing an electrode for an all-solid-state battery is reduced, the input and output characteristics of the battery can be improved by applying the electrode to an all-solid-state battery. Therefore, according to still another aspect of the present invention, there is provided an all-solid-state battery including an electrode obtained by the method for manufacturing an electrode for an all-solid-state battery. In the all-solid-state battery according to the present aspect, the electrode is preferably a positive electrode.

Hereinafter, the present aspects will be described with reference to the drawings, but the technical scope of the present invention should be determined based on the description of the claims, and is not limited to the following aspects. Dimensional ratios in the drawings are exaggerated for convenience of description, and may be different from actual ratios.

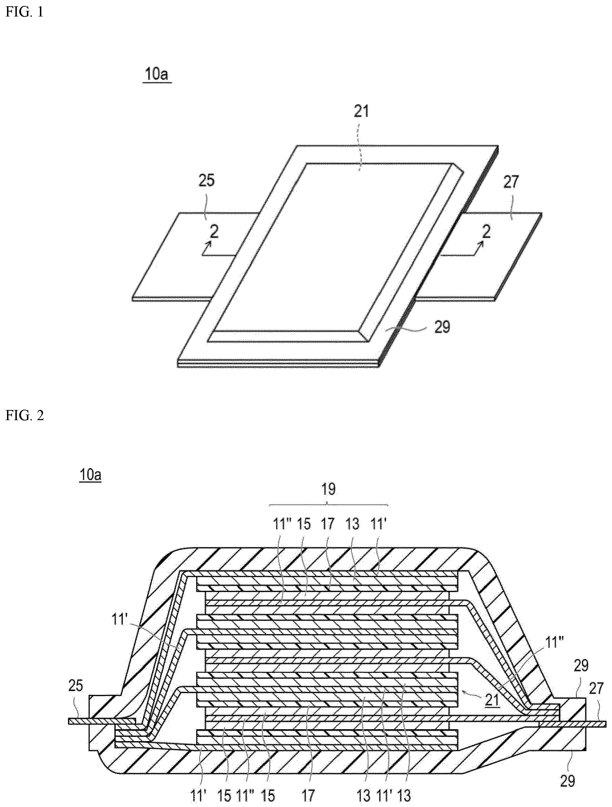

Fig. 1 is a perspective view illustrating an appearance of a flat laminate type all-solid-state lithium secondary battery as one embodiment of the present invention. Fig. 2 is a cross-sectional view taken along line 2-2 illustrated in Fig. 1. The battery is formed into the laminate type, thereby allowing the battery to be compact and have a high capacity. In the present specification, a flat laminate type all-solid-state lithium secondary battery (hereinafter, also simply referred to as "laminate type secondary battery") that is not a bipolar type illustrated in Figs. 1 and 2 will be described in detail as an example. However, in the case of viewing the present invention in an electric connection form (electrode structure) in the secondary battery according to the present aspect, the present invention can be applied to both a non-bipolar type (internal parallel connection type) battery and a bipolar type (internal serial connection type) battery.

As illustrated in Fig. 1, a laminate type secondary battery 10a has a flat rectangular shape, and a negative electrode current collecting plate 25 and a positive electrode current collecting plate 27 for extracting electric power are extended from both sides of the battery. A power generating element 21 is wrapped in a battery outer casing material (laminate film 29) of the laminate type secondary battery 10a, the periphery of the battery outer casing material is heat-sealed, and the power generating element 21 is hermetically sealed in a state where the negative electrode current collecting plate 25 and the positive electrode current collecting plate 27 are extended to the outside. As for the extending of the current collecting plate (25, 27) illustrated in Fig. 1, for example, the negative electrode current collecting plate 25 and the positive electrode current collecting plate 27 may be extended from the same side, or each of the negative electrode current collecting plate 25 and the positive electrode current collecting plate 27 may be divided into a plurality of pieces and extended from each side, or the like, and the extending is not limited to that illustrated in Fig. 1.

As illustrated in Fig. 2, the power generating element 21 of the laminate type secondary battery 10a of the present embodiment has a configuration in which a negative electrode where a negative electrode active material layer 13 containing lithium metal is disposed on both surfaces of a negative electrode current collector **11',** a solid electrolyte layer 17, and a positive electrode where a positive electrode active material layer 15 containing a lithium transition metal composite oxide is disposed on both surfaces of a positive electrode current collector 11" are laminated, at the time of charging. Specifically, the negative electrode, the solid electrolyte layer, and the positive electrode are laminated in this order such that one negative electrode active material layer 13 and the positive electrode active material layer 15 adjacent thereto face each other with the solid electrolyte layer 17 interposed therebetween. Thereby, the negative electrode, the solid electrolyte layer, and the positive electrode that are adjacent constitute one single battery layer 19. Therefore, it can be said that the laminate type secondary battery 10a illustrated in Fig. 2 has a configuration in which a plurality of single battery layers 19 are laminated to be electrically connected in parallel.

The negative electrode current collector 11' and the positive electrode current collector 11" have a structure in which the negative electrode current collecting plate 25 and the positive electrode current collecting plate 27 which are electrically connected to the respective electrodes (the negative electrode and the positive electrode) are respectively attached to the negative electrode current collector 11' and the positive electrode current collector 11" and are led to an outside of the laminate film 29 so as to be sandwiched between end parts of the laminate film 29. The negative electrode current collecting plate 25 and the positive electrode current collecting plate 27 may be attached to the negative electrode current collector 11' and the positive electrode current collector 11" of the respective electrodes with a positive electrode terminal lead and a negative electrode terminal lead (not illustrated) interposed therebetween, respectively by ultrasonic welding, resistance welding, or the like as necessary.

In the laminate type secondary battery 10a according to the present aspect, it is preferable that the power generating element 21 sealed in the laminate film 29 and the power generating element 21 sealed in the laminate film 29 illustrated in Fig. 1 are sandwiched between two plate-shaped members and further fastened using a fastening member. Thereby, the plate-shaped member and the fastening member function as a pressurizing member that pressurizes (confines) the power generating element 21 in the lamination direction thereof. Examples of the plate-shaped member include a metal plate, a resin plate, and the like. Examples of the fastening member include a bolt, a nut, and the like. However, the pressurizing member is not particularly limited as long as it is a member that can pressurize the power generating element 21 in the lamination direction. Typically, a combination of a plate formed of a material having rigidity such as a plate-shaped member and the above-described fastening member is used as the pressurizing member. As the fastening member, not only the bolt and the nut but also a tension plate or the like that fixes the end part of the plate-shaped member so as to confine the power generating element 21 in the lamination direction may be used. The lower limit of the load applied to the power generating element 21 (confining pressure in the lamination direction of the power generating element) is, for example, 0.1 MPa or more, preferably 1 MPa or more, more preferably 3 MPa or more, and further preferably 5 MPa or more. The upper limit of the confining pressure in the lamination direction of the power generating element is, for example, 100 MPa or less, preferably 70 MPa or less, more preferably 40 MPa or less, and further preferably 10 MPa or less.

Hereinafter, main components of the laminate type secondary battery 10a described above will be described.

### [Current collector]

The current collector (the negative electrode current collector 11' and the positive electrode current collector 11") is a conductive member that functions as a flow path for electrons emitted from a positive electrode toward an external load or flowing from a power source toward the positive electrode along with the progression of the battery reaction (charge and discharge reaction). A material constituting the current collector is not particularly limited, but for example, a metal or a resin having conductivity can be adopted.

Specific examples of the metal include aluminum, nickel, iron, stainless steel, titanium, copper, and the like. In addition to these, a clad material of nickel and aluminum, a clad material of copper and aluminum, or the like may be used. A foil in which a metal surface is coated with aluminum may be used. Among them, aluminum, stainless steel, copper, and nickel are preferable from the viewpoint of the electron conductivity, the battery operating potential, adhesion of the active material, and the like.

Examples of the latter resin having conductivity include a resin obtained by adding a conductive filler to a conductive polymer material or a non-conductive polymer material as necessary.

The current collector may have a single-layer structure made of a single material, or may have a laminated structure in which layers made of these materials are appropriately combined. From the viewpoint of weight reduction of the current collector, it is preferable that the current collector includes at least a conductive resin layer made of a resin having conductivity. From the viewpoint of blocking the movement of lithium ions between single battery layers, a metal layer may be provided in a part of the current collector. As long as the negative electrode active material layer and the positive electrode active material layer described above have conductivity by themselves and can exhibit a current collecting function, a current collector as a member different from these active material layers may not be used. In such an embodiment, the negative electrode active material layer described above as it constitutes a negative electrode, and the positive electrode active material layer described above as it constitutes a positive electrode.

### [Solid electrolyte layer]

In the laminate type secondary battery according to the embodiment illustrated in Figs. 1 and 2, the solid electrolyte layer 17 is interposed between the positive electrode active material layer and the negative electrode active material layer and contains a solid electrolyte (usually as a main component). A specific form of the solid electrolyte contained in the solid electrolyte layer is not particularly limited, and examples and preferred forms of the solid electrolyte described in the section of the first stirring step in the method for manufacturing an all-solid-state battery described above are adopted in the same manner.

The content of the solid electrolyte in the solid electrolyte layer is, for example, preferably within a range of 10 to 100 mass%, more preferably within a range of 50 to 100 mass%, further preferably within a range of 90 to 100 mass%, with respect to the total mass of the solid electrolyte layer.

The solid electrolyte layer may further contain a binder in addition to the solid electrolyte described above.

The thickness of the solid electrolyte layer varies depending on the configuration of the intended all-solid-state battery, but is, for example, preferably within a range of 0.1 to 1000 µm, and more preferably 10 to 40 µm.

### [Positive electrode current collecting plate and negative electrode current collecting plate]

A material constituting the current collecting plates (25 and 27) is not particularly limited, and a known highly conductive material conventionally used as a current collecting plate for a secondary battery can be used. As a constituent material of the current collecting plate, for example, a metal material such as aluminum, copper, titanium, nickel, stainless steel (SUS), or an alloy thereof is preferable. From the viewpoint of weight reduction, corrosion resistance, and high conductivity, aluminum and copper are more preferable, and aluminum is particularly preferable. The same material or different materials may be used for the positive electrode current collecting plate 27 and the negative electrode current collecting plate 25.

### [Positive electrode lead and negative electrode lead]

Although not illustrated, the current collector and the current collecting plate may be electrically connected with a positive electrode lead or a negative electrode lead interposed therebetween. As a constituent material of the positive electrode and negative electrode leads, a material used in a known secondary battery can be similarly adopted. The portion taken out from an outer casing is preferably covered with a heat resistant and insulating heat shrinkable tube or the like so as not to affect a product (for example, an automotive component, particularly an electronic device, or the like) due to electric leakage caused by contact with peripheral devices, wiring lines, or the like.

### [Battery outer casing material]

As the battery outer casing material, a known metal can case can be used, and a bag-shaped case using the laminate film 29 containing aluminum, which can cover a power generating element as illustrated in Figs. 1 and 2, can be used. As the laminate film, for example, a laminate film having a three-layer structure formed by laminating PP, aluminum, and nylon in this order can be used, but the laminate film is not limited thereto at all. From the viewpoint of excellent high output and cooling performance, and suitable application for batteries for large devices for EV and HEV, a laminate film is desirable. Since the group pressure applied to the power generating element from the outside can be easily adjusted, the outer casing is more preferably a laminate film containing aluminum.

Although one embodiment of the all-solid-state battery of the present invention has been described above, the present invention is not limited to only the configurations described in the above-described embodiment, and can be appropriately changed based on the description of the claims.

The following embodiments are also included in the scope of the present invention: the manufacturing method according to claim 1 having the feature of claim 2; the manufacturing method according to claim 1 or 2 having the feature of claim 3; the manufacturing method according to any one of claims 1 to 3 having the feature of claim 4; the manufacturing method according to any one of claims 1 to 4 having the feature of claim 5; and the electrode for an all-solid-state battery according to claim 6 having the feature of claim 7.

### Examples

Hereinafter, the present invention will be described in more detail with reference to Examples. However, the technical scope of the present invention is not limited only to the following Examples. In the following description, the instruments, devices, and the like used in the glove box were sufficiently dried in advance.

### <Preparation example of mixture of positive electrode active material, solid electrolyte, and fibrous conductive aid>

### [Comparative Production Example 1]

### (First stirring step)

In a glove box in an argon atmosphere with a dew point of -68°C or lower, 80 g of NMC composite oxide (LiNi_{0.6}Mn_{0.2}Co_{0.2}O₂ (NMC622), average particle size (D50): 10 µm) as a positive electrode active material and 15 g of an argyrodite-type sulfide solid electrolyte (Li₆PS₅Cl, average particle size (D50): 1 µm) as a solid electrolyte were weighed. These materials were placed in a polypropylene (PP) container with a lid (a cylindrical container where the diameter of the container interior is 65 mm and the height of the container interior is 100 mm) as a first container, and the container was set in a low-frequency resonance acoustic mixer (LabRAM II, manufactured by RESODYN ACOUSTIC MIXERS, INC., the same applies hereinafter). At this time, setting was performed such that the vibration direction of the low-frequency resonance acoustic mixer was parallel to the height direction of the container. Stirring was performed for 10 minutes under the conditions of an acceleration of 100 G and a frequency of 60 Hz to obtain a mixture of the positive electrode active material and the solid electrolyte.

### (Second stirring step)

In a glove box in an argon atmosphere with a dew point of -68°C or lower, 3 g of carbon nanofibers (CNF) (aspect ratio: 60, average fiber diameter: about 150 nm, average fiber length: about 63 µm) as a fibrous conductive aid was weighed. The mixture obtained in the first stirring step and the fibrous conductive aid were placed in a polypropylene (PP) container with a lid (a cylindrical container where the diameter of the container interior is 65 mm and the height of the container interior is 100 mm) as a second container, and the container was set in a low-frequency resonance acoustic mixer. At this time, setting was performed such that the vibration direction of the low-frequency resonance acoustic mixer was parallel to the height direction of the container. Stirring was performed for 10 minutes under the conditions of an acceleration of 100 G and a frequency of 60 Hz to obtain a mixture of the positive electrode active material, the solid electrolyte, and the fibrous conductive aid.

### [Comparative Production Example 2]

In the first stirring step, a polypropylene (PP) container with a lid (a cylindrical container where the diameter of the container interior is 65 mm and the height of the container interior is 50 mm) was used as a first container. In the second stirring step, a polypropylene (PP) container with a lid (a cylindrical container where the diameter of the container interior is 65 mm and the height of the container interior is 50 mm) was used as a second container. Except for these, the same procedure as in Comparative Production Example 1 was carried out to obtain a mixture of this comparative production example.

### [Production Example 1]

In the first stirring step, a polypropylene (PP) container with a lid (a cylindrical container where the diameter of the container interior is 65 mm and the height of the container interior is 50 mm) was used as a first container. Except for this, the same procedure as in Comparative Production Example 1 was carried out to obtain a mixture of this production example.

### [Comparative Production Example 3]

In the second stirring step, a polypropylene (PP) container with a lid (a cylindrical container where the diameter of the container interior is 65 mm and the height of the container interior is 50 mm) was used as a second container. Except for this, the same procedure as in Comparative Production Example 1 was carried out to obtain a mixture of this comparative production example.

### <Dispersibility of mixture>

For the mixture of the positive electrode active material, the solid electrolyte, and the fibrous conductive aid obtained in each of Production Examples and Comparative Production Examples described above, the dispersibility of the fibrous conductive aid was evaluated by the following method. First, an image of the mixture was taken at a magnification of 1000 times under the condition of an acceleration voltage of 5 kV using a scanning electron microscope (SEM). The obtained image was binarized, and the portion of the fibrous conductive aid was identified. The image was divided into 16 sections, and for each of the divided sections, the ratio of the area occupied by the fibrous conductive aid to the area of one section was determined. The standard deviation (σ) and the average value (µ) of each of the obtained 16 values were determined, and a value (σ/µ) obtained by dividing the standard deviation (σ) by the average value (µ) was used as an index of the dispersibility of the fibrous conductive aid. A case where the value (σ/µ) was more than 0.40 was evaluated as × (poor), a case where the value (σ/µ) was 0.25 or more and less than 0.40 was evaluated as Δ a (satisfactory), and case where the value (σ/µ) was less than 0.25 was evaluated as ∘ (good). The results are shown in Table 1 below.

### <Resistance of mixture>

For the mixture of the positive electrode active material, the solid electrolyte, and the fibrous conductive aid obtained in each of Production Examples and Comparative Production Examples described above, the resistance was evaluated by the following method. First, in a glove box in an argon atmosphere with a dew point of -68°C or lower, a cylindrical convex punch (10.2 mm diameter) made of SUS was inserted into one side of a cylindrical tube jig (tube inner diameter: 10.2 mm, outer diameter: 23 mm, height: 20 mm) made of Macor, and 200 mg of the mixture was inserted from the upper side of the cylindrical tube jig. Thereafter, another cylindrical convex punch made of SUS was inserted to sandwich the mixture, and the mixture was pressed at a pressure of 100 MPa to prepare a blocking cell in which SUS/mixture/SUS was laminated. Next, the impedance of the cell was measured. The measurement was performed in a state of being pressurized to 25°C and 100 MPa, and the impedance at 100 kHz was defined as a resistance value (Ω). Then, the volume resistivity (Ω·cm) was calculated from the formula: volume resistivity (Ω·cm) = resistance value (Ω) × cross-sectional area (0.5 cm × 0.5 cm × 3.14)/thickness (cm), and used as an index of the resistance of the mixture. The results are shown in Table 1 below.

### <Preparation example of positive electrode active material layer>

### [Comparative Example 1]

In a glove box in an argon atmosphere with a dew point of -68°C or lower, the mixture obtained in Comparative Production Example 1 described above and polytetrafluoroethylene (PTFE) were weighed so as to have a mass ratio of 98 : 2, and kneaded in an agate mortar for 30 minutes (kneading step). After it was confirmed that the PTFE was fibrillated by the kneading step, the obtained mixture was formed into a sheet using a hand roller and punched into a circle having a diameter of 10 mm to obtain a positive electrode active material layer (thickness: 80 µm) of this comparative example.

### [Comparative Example 2]

A positive electrode active material layer of this comparative example was obtained in the same manner as in Comparative Example 1, except that the mixture obtained in Comparative Production Example 2 was used instead of the mixture obtained in Comparative Production Example 1.

### [Example 1]

A positive electrode active material layer of this example was obtained in the same manner as in Comparative Example 1, except that the mixture obtained in Production Example 1 was used instead of the mixture obtained in Comparative Production Example 1.

### [Comparative Example 3]

A positive electrode active material layer of this comparative example was obtained in the same manner as in Comparative Example 1, except that the mixture obtained in Comparative Production Example 3 was used instead of the mixture obtained in Comparative Production Example 1.

### <Observation of positive electrode active material layer>

The fibrous conductive aid contained in the positive electrode active material layer obtained in each of Examples and Comparative Examples described above was observed by the following method. First, a cross section of the positive electrode active material layer was exposed by FIB (focused ion beam) processing. Five images of the cross section of the positive electrode active material layer were taken at a magnification of 1000 times under the condition of an acceleration voltage of 5 kV using a scanning electron microscope (SEM). Using image analysis software, the fiber lengths of all the fibrous conductive aids observed in the five images were measured. Then, a graph of the fiber length distribution was created with the horizontal axis representing the fiber length of the fibrous conductive aid and the vertical axis representing the number of the fibrous conductive aids, and the number of peaks present in the graph and the fiber length of the peak top were determined. The particle sizes of all the positive electrode active materials observed in each image were measured using image analysis software, and the average particle size (D50) was calculated, and as a result, it was confirmed that the average particle size was 10 µm in all Examples and Comparative Examples. Then, the ratio of the number of the fibrous conductive aids having a fiber length longer than a value (20 µm) that was twice the average particle size (D50) of the positive electrode active material to the total number of the fibrous conductive aids observed in the five images (referred to as "ratio of long fibers" in Table 1 below) was calculated. The results are shown in Table 1 below.

### <Resistance of positive electrode active material layer>

The resistance of the positive electrode active material layer obtained in each of Examples and Comparative Examples described above was evaluated by the following method. First, in a glove box in an argon atmosphere with a dew point of -68°C or lower, a cylindrical convex punch (10 mm diameter) made of SUS was inserted into one side of a cylindrical tube jig (tube inner diameter: 10 mm, outer diameter: 23 mm, height: 20 mm) made of Macor, and the positive electrode active material layer was inserted from the upper side of the cylindrical tube jig. Thereafter, another cylindrical convex punch made of SUS was inserted to sandwich the positive electrode active material layer, and the positive electrode active material layer was pressed an oil hydraulic press at a pressure of 100 MPa for 3 minutes to prepare a blocking cell in which SUS/positive electrode active material layer/SUS was laminated. Next, the impedance of the cell was measured. The measurement was performed in a state of being pressurized to 25°C and 100 MPa, and the impedance at 100 kHz was defined as a resistance value (Q). Then, the volume resistivity (Ω·cm) was calculated from the formula: volume resistivity (Ω·cm) = resistance value (Ω) × cross-sectional area (0.5 cm × 0.5 cm × 3.14)/thickness (cm), and used as an index of the resistance of the positive electrode active material layer. As a result, it was confirmed that the resistance of the positive electrode active material layer correlated with the resistance of the mixture.

### [Table 1]

**Table 1**

| | Production Example/Comparative Production Example | | | | Fibrous conductive aid in positive electrode active material | | | |
|---|---|---|---|---|---|---|---|---|
| | Container height (mm) | | Evaluation of mixture | | | | | |
| | First stirring step | Second stirring step | Dispersibility | Volume resistivity (Ω·cm) | Fiber length of peak top (µm) | | | Ratio of long fibers (%) |
| | | | | | Peak 1 | Peak 2 | Peak 3 | |
| Comparative Example 1 | 100 | 100 | × | 26 | 16 | 40 | 80 | 30 |
| Comparative Example 2 | 50 | 50 | ○ | 46 | 8 | - | - | 0 |
| Example 1 | 50 | 100 | ○ | 25 | 10 | 30 | - | 50 |
| Comparative Example 3 | 100 | 50 | Δ | 38 | 7 | 30 | 60 | 30 |

From the results shown in Table 1, it is found that according to the present invention, in an electrode for an all-solid-state battery including an active material layer containing an active material, a solid electrolyte, a fibrous conductive aid, and PTFE and having sufficient dispersibility, resistance can be reduced.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power generating element
- 25: Negative electrode current collecting plate
- 27: Positive electrode current collecting plate
- 29: Laminate film

## Claims

1. A method for manufacturing an electrode for an all-solid-state battery including an active material layer containing an active material, a solid electrolyte, a fibrous conductive aid, and polytetrafluoroethylene, the method comprising:
a first stirring step of placing the active material and the solid electrolyte in a first container and stirring them using a resonance acoustic mixer; and
a second stirring step of placing a mixture obtained in the first stirring step and the fibrous conductive aid in a second container and stirring them using a resonance acoustic mixer,
wherein the first stirring step and the second stirring step satisfy at least one of the following conditions (1) to (4):
condition (1): a maximum distance D1 between inner walls of the first container parallel to a vibration direction of the resonance acoustic mixer in the first stirring step is shorter than a maximum distance D2 between inner walls of the second container parallel to the vibration direction of the resonance acoustic mixer in the second stirring step;
condition (2): a frequency of the resonance acoustic mixer in the first stirring step is higher than a frequency of the resonance acoustic mixer in the second stirring step;
condition (3): an acceleration of the resonance acoustic mixer in the first stirring step is higher than an acceleration of the resonance acoustic mixer in the second stirring step; and
condition (4): a stirring time in the first stirring step is longer than a stirring time in the second stirring step.

2. The method for manufacturing an electrode for an all-solid-state battery according to claim 1, wherein the first stirring step and the second stirring step satisfy the condition (1), and
satisfy the following conditions (2') to (4'):
condition (2'): a frequency of the resonance acoustic mixer in the first stirring step is the same as a frequency of the resonance acoustic mixer in the second stirring step or higher than a frequency of the resonance acoustic mixer in the second stirring step;
condition (3'): an acceleration of the resonance acoustic mixer in the first stirring step is the same as an acceleration of the resonance acoustic mixer in the second stirring step or higher than a frequency of the resonance acoustic mixer in the second stirring step; and
condition (4'): a stirring time in the first stirring step is the same as a stirring time in the second stirring step or longer than a frequency of the resonance acoustic mixer in the second stirring step.

3. The method for manufacturing an electrode for an all-solid-state battery according to claim 1, wherein the first container and the second container are the same container.

4. The method for manufacturing an electrode for an all-solid-state battery according to claim 1, wherein the first stirring step and the second stirring step are performed in the absence of a solvent.

5. The method for manufacturing an electrode for an all-solid-state battery according to claim 1, further comprising a kneading step of kneading a mixture obtained in the second stirring step and the polytetrafluoroethylene.

6. An electrode for an all-solid-state battery comprising an active material layer containing an active material, a solid electrolyte, a fibrous conductive aid, and polytetrafluoroethylene,
wherein a ratio of the number of fibrous conductive aids having a fiber length of 2 times or more an average particle size (D50) of the active material to the total number of the fibrous conductive aids is 40% or more and 90% or less.

7. The electrode for an all-solid-state battery according to claim 6, wherein a fiber length distribution of the fibrous conductive aid has at least two peaks.
